(19) Europäisches Patentamt
European Patent Office
Office européen des brevets

(11) **EP 3 665 535 B1**

(12) **FASCICULE DE BREVET EUROPÉEN**

(45) Date de publication et mention de la délivrance du brevet:
**19.07.2023 Bulletin 2023/29**

(21) Numéro de dépôt: **18765488.4**

(22) Date de dépôt: **09.08.2018**

(51) Classification Internationale des Brevets (IPC):
***G05B 11/32*** [(2006.01)]

(52) Classification Coopérative des Brevets (CPC):
**G05B 11/32**

(86) Numéro de dépôt international:
**PCT/FR2018/052051**

(87) Numéro de publication internationale:
**WO 2019/030460 (14.02.2019 Gazette 2019/07)**

(54) **SYSTÈME MIXTE DE COMMANDE DE MOTEUR D'AÉRONEF ET PROCÉDÉ DE RÉGLAGE ASSOCIÉ**

HYBRIDSYSTEM ZUR STEUERUNG EINES FLUGZEUGMOTORS UND VERFAHREN ZUR STEUERUNG DAVON

HYBRID SYSTEM FOR CONTROLLING AN AIRCRAFT ENGINE AND METHOD FOR CONTROLLING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2017 FR 1757610**

(43) Date de publication de la demande:
**17.06.2020 Bulletin 2020/25**

(73) Titulaire: **Safran Aircraft Engines**
**75015 Paris (FR)**

(72) Inventeurs:
- **LE BRUN, Christophe Marc Alexandre**
  **77550 Moissy-Cramayel (FR)**
- **LIACU, Bogdan Cristian**
  **77550 Moissy-Cramayel (FR)**

(74) Mandataire: **Regimbeau**
**20, rue de Chazelles**
**75847 Paris Cedex 17 (FR)**

(56) Documents cités:
**US-A- 5 001 646     US-A- 5 274 558**
**US-A- 5 920 478     US-A1- 2009 281 641**
**US-B1- 7 890 198**

**Description**

## DOMAINE TECHNIQUE GÉNÉRAL

Afin d'optimiser les performances des moteurs (turbomachines) d'aéronefs sur l'ensemble du domaine de vol, un des leviers possibles est d'ajouter des « géométries variables » (vannes de décharge, aubes ou pales à calage variable, volets de tuyère à section variable, etc...). De manière générale, les géométries variables sont des organes munis d'éléments mobiles dont la position peut être pilotée pour faire varier des paramètres comme l'écoulement d'un flux de gaz, et qui permettent ainsi d'avoir des degrés de liberté sur l'opérabilité de la turbomachine. Elles sont typiquement pilotées par un calculateur, et leurs actions doivent être coordonnées pour être optimales en termes de performances et rester dans les limites acceptables d'opérabilité et de sécurité de fonctionnement de la turbomachine (notamment en termes de pression, température, régimes, couples...).

On parle de manière générale de système multivariable lorsqu'un système possède plusieurs entrées et/ou plusieurs sorties. Les stratégies classiques monovariables d'architecture et de réglage ne sont généralement pas adaptées à ces systèmes du fait des interactions entre les différentes variables.

### *Cas du turbopropulseur*

Un turbopropulseur est classiquement constitué d'un générateur de gaz (turbine) entraînant une hélice à pas variable.

L'objectif principal du système de régulation d'un turbopropulseur est d'assurer la poussée souhaitée tout en conservant une vitesse de rotation de l'hélice constante. Du point de vue de la commande, un turbopropulseur peut être vu comme un système multivariable comprenant :

- deux grandeurs d'entrée :

  ◦ le débit carburant, qui sera noté WF,
  ◦ le pas de l'hélice (également appelé angle de calage), qui sera noté $B$ ;

- deux grandeurs de sortie :

  ◦ la puissance de l'hélice, qui sera noté SHP,
  ◦ la vitesse de rotation de l'hélice, qui sera noté *XNP*.

Généralement, la puissance *SHP* est commandée par l'action du débit carburant *WF,* tandis que la vitesse de rotation de l'hélice *XNP* est commandée par l'action sur le pas de l'hélice *B*. La vitesse *XNP* est asservie autour de plusieurs paliers de vitesse, définis par rapport aux conditions de vol et par rapport à l'état du turbopropulseur.

Le problème principal de la régulation est que la demande de variation de puissance $SHP_{ref}$ entraîne une variation non désirée de la vitesse de rotation de l'hélice *XNP*. De même, la variation de la demande de vitesse de rotation de l'hélice $XNP_{ref}$ affecte la puissance du générateur de gaz *SHP*. Cela est dû fait que chacune des commandes agit sur chacune des sorties.

Ces perturbations sont fortement préjudiciables au turbopropulseur. Elles entraînent notamment des sur-couples importants qui endommagent les composants en fatigue, et en particulier le réducteur.

### *Autres exemples d'applications*

Les contrôles moteurs d'autres applications sont également concernés.

C'est le cas par exemple de la commande d'un moteur possédant un doublet d'hélices contrarotatives non carénées (ou « Open-Rotor » selon la terminologie anglosaxonne généralement utilisée dans le domaine), qui est une application similaire à un turbopropulseur du point de vue de la commande : le système utilise trois grandeurs d'entrée (le débit carburant et les pas respectifs des deux hélices contrarotatives) pour commander trois grandeurs de sortie (le régime du corps basse pression et les régimes de chacune des deux hélices).

C'est également le cas de turboréacteurs pour lesquels la section de la tuyère peut être pilotée en plus du débit carburant. Ce degré de liberté supplémentaire permet principalement de jouer sur la vitesse d'éjection des gaz et par conséquence la poussée.

Différentes géométries variables peuvent également être intégrées dans des turboréacteurs. Bien que les consignes des géométries variables et du débit carburant d'un turboréacteur soient élaborées en coordination, leurs commandes (courants de servovalve) sont synthétisées indépendamment et peuvent affecter certains paramètres de fonctionnement communs comme les régimes ou la ligne d'opérabilité des compresseurs.

*Principaux objectifs pour la synthèse de lois de commande*

Les principaux objectifs pour la synthèse de lois de commande pour ces systèmes sont les suivants :

- Respect des spécifications données par le cahier des charges (temps de réponse, dépassement, marges de stabilité),
- Limitation les interactions entre les différentes variables : la variation de consigne d'une des grandeurs doit provoquer le plus petit écart possible sur les autres grandeurs,
- Robustesse de la commande aux perturbations et aux incertitudes de modélisation.

En dehors des objectifs de performances, les lois de commande doivent être facilement ajustables et d'une complexité raisonnable pour faciliter leur réglage, leur ajustement en essais et leur implémentation dans les calculateurs.

*Solutions existantes de commande multivariable avec découplage*

Dans ces approches, les lois de commande sont synthétisées à partir d'un modèle linéaire identifié autour de points de fonctionnement. Les schémas des systèmes de l'art antérieur qui suivent sont présentés avec des modèles de turbopropulseur linéaire. Ces modèles sont notés G lorsque le formalisme de matrice de transfert est utilisé. Lorsque le formalisme d'état est utilisé, le modèle de turbopropulseur se compose des matrices d'état, de commande et de sortie A, B et C (la matrice d'action directe D étant nulle dans les applications de contrôle moteur considérées).

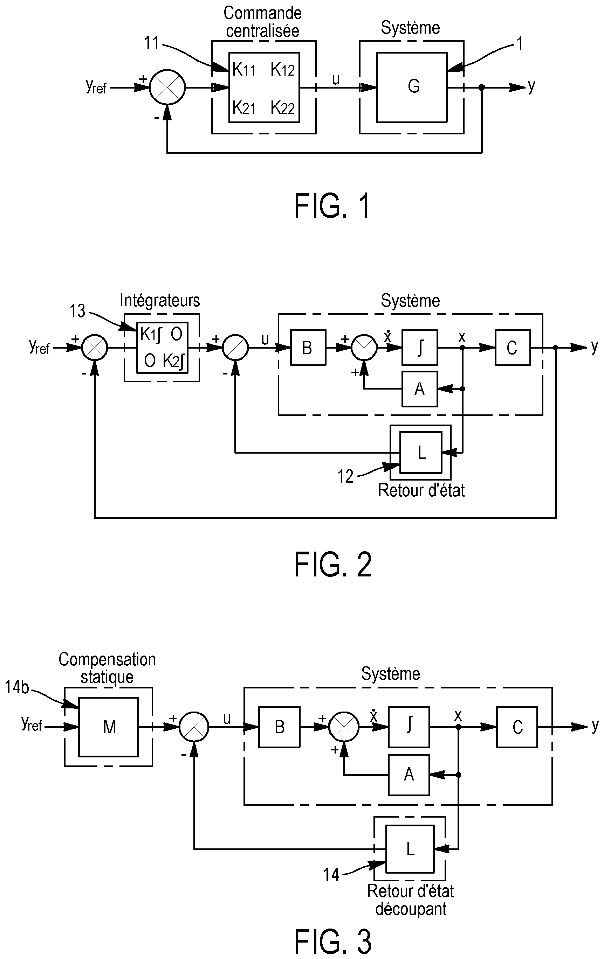

Comme illustré sur la figure 1, on connaît des approches dites centralisées de type $H_2$, $H_\infty$ (comme celle décrit dans le document G. Zames, Feedback and Optimal Sensitivity Model Reference Transformations, Multiplicative Seminorms, and Approximations, IEEE Transactions on Automatic Control, vol. 26, issue n°4, 1981).

Ces approches permettent de synthétiser un correcteur multivariable 11 prenant en compte directement la puissance SHP et la vitesse de l'hélice XNP.

Bien que ces solutions soient relativement performantes, leur développement nécessite des calculs importants, et les correcteurs obtenus sont généralement complexes. Par ailleurs, ces lois de commande ne sont pas intuitives, ce qui constitue un problème évident pour les ajustements des réglages lors d'essais moteurs.

Comme illustré sur la figure 2, on connaît également des commandes par retour d'état (de type méthode de placement de pôles, méthode de la commande linéaire quadratique). Ces méthodes consistent à ajouter une rétroaction comportant un retour d'état 12. Des termes d'action intégrale 13 sont généralement ajoutés au retour d'état 12 afin d'obtenir de bonnes performances.

Ces méthodes n'étant pas axées sur le découplage, les interactions entre les boucles Puissance SHP et Hélice XNP restent généralement trop importantes. Par ailleurs, les commandes par retour d'état sont difficilement ajustables sur banc moteur.

Comme illustré sur la figure 3, on connaît des approches de découplage par retour d'état (comme par exemple la synthèse de Falb-Wolovich (décrite dans « Commande et estimation multivariables », Ostertag, 2006) ou la synthèse modale complète). Ces méthodes consistent à ajouter une rétroaction comportant un retour d'état 14 et une compensation statique M 14b pour découpler le système.

L'avantage de ces méthodes est qu'elles permettent d'obtenir un découplage total, avec des correcteurs relativement simples.

Ces méthodes ne sont cependant pas compatibles avec l'ajout d'actions intégrales. En effet, ces méthodes sont basées sur le déplacement d'un nombre limité de pôles dépendant du système, et le fait d'ajouter des intégrateurs et donc des pôles instables conduit à déplacer ces derniers au lieu des pôles du système. Les performances obtenues sont alors insuffisantes, notamment en termes de rejet de perturbations. Par ailleurs, les commandes par retour d'état sont difficilement ajustables en pratique.

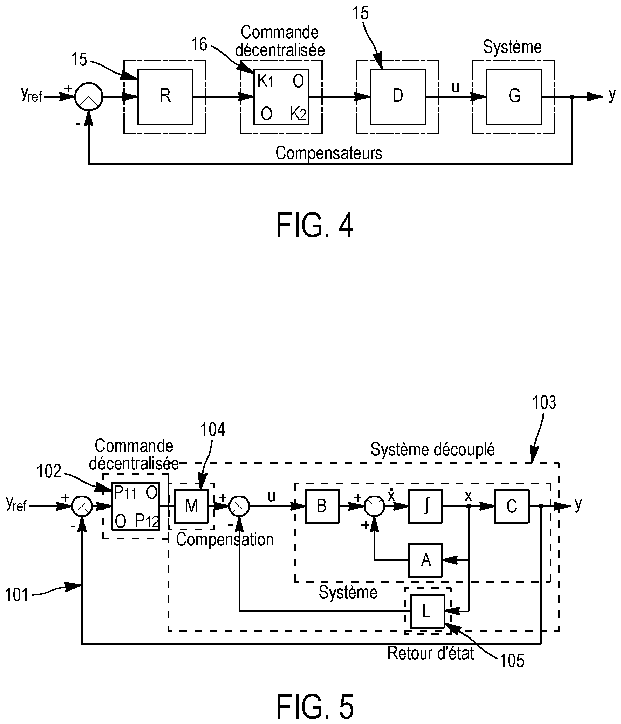

Comme illustré sur la figure 4, on connaît également des méthodes fréquentielles de découplage (comme les méthodes de pseudo-diagonalisation, de décomposition en valeurs propres et en valeurs singulières, de découpleur simplifié, ou de découpleur idéal) qui permettent de découpler le système à l'aide de compensateurs 15, avant d'utiliser des régulateurs monovariables 16 de type PID permettant d'asservir le système.

L'avantage de ces méthodes est que les étapes de synthèse des compensateurs 15 et des régulateurs monovariables 16 sont distinctes. Il est donc relativement simple d'ajuster a posteriori les réglages des régulateurs monovariables 16.

Le problème est que des compensateurs simples ne parviennent généralement pas à assurer un découplage satisfaisant. Un découplage convenable ou parfait ne peut être atteint qu'en utilisant des compensateurs complexes, difficilement implémentables et interpolables.

Certaines méthodes consistent à implémenter uniquement la matrice de compensation 15 comme des biais à ajouter sur les commandes pour compenser les perturbations des différentes boucles. Le problème de ces méthodes est que les biais sont difficilement calculables et pas toujours suffisamment précis.

Les approches précédentes permettent :

- d'obtenir un découplage moyen, ou

d'obtenir un découplage correct, au prix de lois de commande et de méthodes de synthèse relativement complexes.

On connaît par ailleurs par le document US 5 274 558 un système de moteur d'aéronef qui comporte

- une boucle d'asservissement qui reçoit en entrée une consigne de couple QCMD;
- une boucle de vitesse de rotation (figure 3 - consigne de vitesse NPSFLT).

Le système comprend également un bloc de découplage 18, 35 qui fournit un signal indiquant le couple découplé QDC qui permet de découpler la boucle de couple de la boucle de vitesse, de sorte que seule la boucle de vitesse réagit aux changements soudains du régime moteur.

Aucune commande par retour d'état n'y est prévue.

Le document US 5 001 646 décrit un système de commande de vol électrique (selon la terminologie anglaise « fly-by-wire ») d'un hélicoptère.

Ce système comporte au moins une boucle d'asservissement qui reçoit en entréedes consignes de paramètres (roulis, tangage, lacet, vertical) venant d'une manette de contrôle.

Une boucle de rétroaction commande les paramètres de fonctionnement du moteur.

Ce système ne prévoit pas non plus de commande à retour d'état.

Le document US 5 920 478 décrit quant à lui un système de contrôle dynamique générique à boucle d'asservissement.

Un découplage traite les données MIMO pour les convertir en données permettant un traitement monovariable SISO simple, tout en tenant compte des interactions complexes entre les variables.

Le découplage employé n'est pas du type à retour d'état, mais correspond aux découplages présentés ci-dessus en référence à la figure 4. Comme déjà indiqué, ces découplages présentent l'inconvénient de ne pas permettre un découplage satisfaisant, sauf à utiliser des compensateurs particulièrement complexes.

## PRESENTATION GENERALE DE L'INVENTION

Un but général de l'invention est de garantir les performances souhaitées, notamment en termes de découplage, tout en préservant la possibilité de régler les correcteurs d'une manière simple et intuitive.

A cet effet, il est proposé un système de commande d'un moteur d'aéronef qui comporte :

- au moins une boucle d'asservissement qui reçoit en entrée des consignes de paramètres de fonctionnement du moteur et qui commande le système avec une boucle de rétroaction sur ces paramètres de fonctionnement, ladite boucle d'asservissement comportant une commande décentralisée à régulateurs monovariables,
- au moins une commande par retour d'état intégrée dans la boucle d'asservissement, ladite commande recevant en entrée les sorties de la commande décentralisée à régulateurs monovariables et étant une boucle de rétroaction entre les paramètres de fonctionnement du moteur et les sorties de ladite commande décentralisée, ladite boucle de rétroaction fournissant les paramètres de commande du moteur,

la commande par retour d'état étant configurée pour découpler les paramètres de fonctionnement, les régulateurs monovariables de la commande décentralisée étant configurés pour asservir les paramètres de fonctionnement sur les consignes de ces paramètres.

Par commande décentralisée, on entend ici une commande qui n'est pas centralisée, mais qui utilise une pluralité de lois de commande locales et indépendantes pour les différents sous-systèmes à commander.

La commande à retour peut comporter un compensateur statique et une boucle à correcteur de retour d'état, ledit compensateur statique et ladite boucle à correcteur de retour d'état étant configurés pour découpler les paramètres de fonctionnement.

Un tel système combine les avantages des solutions de découplage par retour d'état et des méthodes fréquentielles de découplage.

Notamment, la conception du découplage et les régulateurs sont séparés.

Le découplage étant réalisé par une approche de découplage par retour d'état, il est alors possible d'assurer un découplage total avec un correcteur d'état L très simple et une matrice de compensation M, tout en conservant, à l'inverse des méthodes de découplage classiques, les dynamiques principales du procédé (ce qui se traduit matriciellement par des valeurs égales à 0 sur les éléments non diagonaux, et des valeurs non nulles sur les éléments diagonaux).

Ainsi, la réduction des couplages est très efficace. En outre, le retour d'état découplant consiste en deux simples matrices de gains : le retour d'état et la compensation statique.

Les régulateurs monovariables de la commande décentralisée sont avantageusement des correcteurs proportionnels / intégrateurs (correcteurs PI).

Les correcteurs PI permettent d'assurer les performances désirées.

Ils ont l'avantage d'être simples et leurs réglages sont facilités du fait du découplage. Par ailleurs, ils peuvent facilement être ajustés/recalés, et ce, indépendamment du retour d'état découplant. Ces ajustements/recalages peuvent être réalisés lors des phases de conception, au cours d'essais sur bancs de tests, mais également au cours de la vie du turbopropulseur. En effet, le comportement du système est modifié lors du vieillissement de celui-ci. Il est alors possible d'adapter les correcteurs PI dans le but de maintenir les performances souhaitées (notamment en termes de temps de réponse et de dépassement).

L'invention concerne également un procédé de paramétrage d'un système de commande d'un moteur d'aéronef selon l'une des revendications précédentes, comportant des étapes consistant à :

- définir un modèle linéaire de moteur, le modèle possédant une fonction de transfert et une représentation d'état ;
- définir un compensateur statique et un correcteur de retour d'état de manière à découpler les états constitués par les paramètres de fonctionnement du moteur à asservir ;
- définir les régulateurs monovariables de manière à asservir lesdits paramètres de fonctionnement sur les consignes.

On réalise ainsi un découplage mixte par lequel :

- on réalise le découplage par un retour d'état,
- on synthétise des régulateurs (notamment, des régulateurs PI) à partir du procédé découplé par retour d'état.

Notamment, le correcteur de retour d'état et le compensateur statique peuvent être configurés pour que la fonction de transfert du système de commande ait des gains et pôles correspondant à ceux de la fonction de transfert du modèle de moteur.

Le procédé peut en outre comporter une étape d'interpolation des correcteurs monovariables en fonction de variables de conditions de vol.

Les paramètres des correcteurs monovariables peuvent être interpolés individuellement par séquencement de gains.

Le procédé peut en outre comporter une étape d'interpolation du correcteur de retour d'état et du compensateur statique en fonction de variables de conditions de vol.

L'invention concerne en outre l'utilisation du système proposé pour diverses applications.

On notera que la solution proposée par l'invention est particulièrement efficace dans le cas de systèmes considérant 2 ou 3 commandes et sorties, un nombre plus important de variables pouvant être envisagé, mais le cas échéant avec des résultats moins précis. Les lois de commande sont en effet généralement synthétisées sur un modèle linéaire nominal. Ce modèle n'étant jamais parfait, les lois de commande n'assurent généralement pas le même niveau de performances sur le modèle non linéaire. Il en va de même pour le découplage, qui est connu pour être assez sensible aux incertitudes de modèles. Les matrices $M$ et $L$ prennent en compte l'ensemble des transferts du système multivariable et risquent de s'avérer moins précises lorsque le nombre de variables augmente.

Dans le cas de la commande d'un moteur possédant une hélice à pas variable, tel qu'un turbopropulseur, les paramètres de fonctionnement asservis comprennent la puissance de l'hélice (SHP) et sa vitesse de rotation (XNP), les paramètres commandés comprenant le débit carburant et le pas de l'hélice.

Dans le cas d'une commande d'un moteur possédant un doublet d'hélices contrarotatives à pas variables (doublet d'hélices contrarotatives à pas variables non carénées « Open Rotor » ou carénées « Contrafan »), dans lequel les paramètres de fonctionnement asservis comprennent le régime du corps basse pression (NBP) et les régimes des deux hélices (N1 et N2), les paramètres commandés comprenant le débit carburant (WF) et les pas des hélices ($\beta_1$ et $\beta_2$).

Pour la commande d'un turboréacteur à section de tuyère pilotée, les paramètres de fonctionnement asservis comprennent le régime du corps basse pression (NBP) et la position du ou des vérins (xT) commandant la section réglable de la tuyère, les commandes comprenant le débit carburant (WF) et le courant de servovalve (iTuy) alimentant le ou les vérins.

Dans le cas de la commande d'un turboréacteur possédant des géométries variables, les paramètres de fonctionnement asservis comprennent le régime du corps basse pression (NBP) et les positions des vérins (xVSV et xVBV) (d'autres paramètres de fonctionnement comme la ligne d'opérabilité du booster peuvent également être envisagés), et les commandes comprennent le débit carburant WF et les courants de commande des servovalves (iVSV et iVBV).

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 illustre schématiquement un système de régulation centralisé de l'art antérieur ;
- la figure 2 illustre schématiquement un système de régulation par retour d'état de l'art antérieur ;
- la figure 3 illustre schématiquement un système de découplage par retour d'état de l'art antérieur ;
- la figure 4 illustre schématiquement une méthode fréquentielle de découplage de l'art antérieur ;
- la figure 5 un système de commande à stratégie mixte conforme à un mode de réalisation possible de l'invention ;
- la figure 6 illustre la commande par retour d'état du système de la figure 5 ;
- la figure 7 illustre un exemple d'application de l'invention à la commande de turbopropulseur.

## DESCRIPTION D'UN OU PLUSIEURS MODES DE RÉALISATION

Dans l'exemple illustré sur la figure 5, on se situe dans le cas de deux consignes, commandes et sorties, cette architecture et le procédé de réglage étant généralisés dans ce qui suit à N consignes, commandes et sorties.

L'architecture de ce système de commande 100 comprend :

- une boucle 101 de commande décentralisée avec compensateurs ;
- un système 103 de découplage par retour d'état intégré à ladite boucle 101.

La boucle 101 reçoit N consignes Yref et comprend une commande décentralisée 102 dont les sorties alimentent le système de découplage par retour d'état 103 et dont les correcteurs sont choisis pour permettre à la boucle 101 d'assurer la fonction d'asservissement du procédé.

*Découplage par retour d'état*

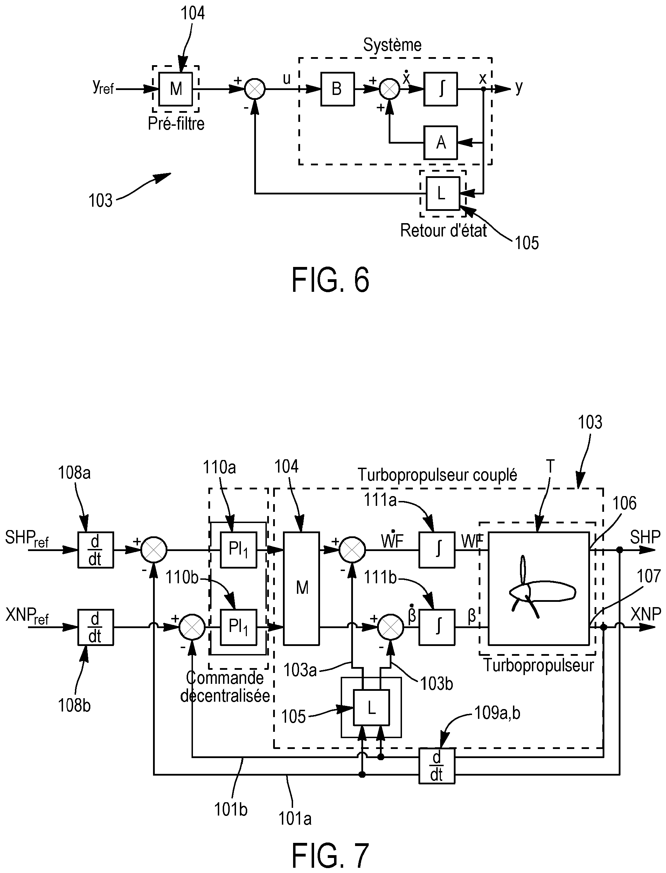

Le système de découplage par retour d'état est plus particulièrement repris sur la figure 6 et comporte :

- un compensateur statique 104 configuré pour découpler les consignes en sortie de la commande décentralisée 101 (matrice de pré-filtre *M* (ou matrice de compensation)) ;
- un correcteur de retour d'état 105 (matrice *L* de retour d'état).

Dans ce qui, on suppose que les hypothèses suivantes sont respectées :

- Le procédé est linéaire.
- Le nombre de commandes est égal au nombre de sorties à asservir. Il s'agit d'une hypothèse classique pour du découplage (et il n'est de toute manière pas possible de découpler un système si l'on n'a pas le nombre de degrés de liberté nécessaire).
- La matrice d'action directe est nulle. C'est une hypothèse classique respectée naturellement par la majorité des systèmes de commande par retour d'état (les commandes n'agissent pas instantanément sur les sorties).
- La matrice de commande B est inversible.
- Le procédé ne comporte pas de zéro instable (tout comme les autres méthodes de découplage par retour d'état, un zéro instable introduirait un pôle instable dans la solution).

Egalement, on se place dans le cas où le nombre d'états du système est égal au nombre de sorties (tous les états considérés sont mesurés). Dans ce cas, il est possible d'ajuster A et B de manière à considérer la matrice de sortie C comme la matrice identité.

Cette hypothèse peut néanmoins être contournée. Notamment, dans le cas où le système possède un nombre d'états supérieur au nombre d'entrées/sorties, un observateur peut être rajouté.

Compte tenu des hypothèses énoncées ci-dessus, la matrice de sortie *C* du schéma de la figure 3 est égale à l'identité par hypothèse, de sorte que :

$$y = x \text{ et } \dot{y} = \dot{x}$$

La représentation d'état d s'écrit de la manière suivante :

$$x = A\dot{x} + Bu$$

$$y = x$$

$x(t) \in \mathbb{R}^n$ : colonne qui représente les N variables d'état

$u(t) \in \mathbb{R}^m$ : colonne qui représente les N commandes

$y(t) \in \mathbb{R}^p$ : colonne qui représente les N sorties

$A \in \mathbb{R}^{n \times n}$ : Matrice d'état

$B \in \mathbb{R}^{n \times m}$ : Matrice de commande

de sorte que le système considéré peut être totalement représenté par (1) ci-dessous. Les notations de (2) étant adoptées par la suite.

$$\begin{bmatrix} \dot{x}_1 \\ \vdots \\ \dot{x}_N \end{bmatrix} = \begin{bmatrix} A_{11} & \cdots & A_{1N} \\ \vdots & \ddots & \vdots \\ A_{N1} & \cdots & A_{NN} \end{bmatrix} \begin{bmatrix} x_1 \\ \vdots \\ x_N \end{bmatrix} + \begin{bmatrix} B_{11} & \cdots & B_{1N} \\ \vdots & \ddots & \vdots \\ B_{N1} & \cdots & B_{NN} \end{bmatrix} \begin{bmatrix} u_1 \\ \vdots \\ u_N \end{bmatrix} \quad (1)$$

$$y = \begin{bmatrix} y_1 \\ \vdots \\ y_N \end{bmatrix}; y_{ref} = \begin{bmatrix} y1_{ref} \\ \vdots \\ yN_{ref} \end{bmatrix}; u = \begin{bmatrix} u_1 \\ \vdots \\ u_N \end{bmatrix}; x = \begin{bmatrix} x_1 \\ \vdots \\ x_N \end{bmatrix} \quad (2)$$

La commande ainsi réalisée par le système de découplage de la figure 6 est donc telle que :

$$\dot{x} = Ax + Bu = (A - BL)x + BMy_{ref} \quad (3)$$

L et M sont quant à eux choisis tels que :

$$\begin{cases} L = B^{-1} \left( A - \begin{bmatrix} -p_1 & 0 & 0 \\ 0 & \ddots & 0 \\ 0 & 0 & -p_N \end{bmatrix} \right) \\ M = B^{-1} \begin{bmatrix} G_1 & 0 & 0 \\ 0 & \ddots & 0 \\ 0 & 0 & G_N \end{bmatrix} \end{cases} \quad (4)$$

où les paramètres $p_i$ et $G_i$ sont des valeurs scalaires.

Une telle commande permet en effet un parfait découplage :

- chaque élément de $\dot{x}$ ne dépend que de son élément correspondant dans le vecteur $x$ (par exemple, $\dot{x}_i$ ne doit dépendre que de $x_i$ et pas des autres éléments de x),
- chaque élément de $\dot{x}$ n'est influencé que par son élément correspondant dans le vecteur u (par exemple, $\dot{x}_i$ n'est affecté que par $u_i$ et pas par les autres éléments de u).

Avec de telles matrices L et M en effet :

$$(A - BL) = \begin{bmatrix} -p_1 & 0 & 0 \\ 0 & \ddots & 0 \\ 0 & 0 & -p_N \end{bmatrix} \quad (5)$$

$$BM = \begin{bmatrix} G_1 & 0 & 0 \\ 0 & \ddots & 0 \\ 0 & 0 & G_N \end{bmatrix} \tag{6}$$

On obtient (7) en combinant les expressions (3), (5) et (6). Le passage à (8) et (9) utilise uniquement le fait que $\dot{y} = \dot{x}$ et y = x.

$$\dot{x} = (A - BL)x + BMy_{ref}$$
$$= \begin{bmatrix} -p_1 & 0 & 0 \\ 0 & \ddots & 0 \\ & & \end{bmatrix} x + \begin{bmatrix} G_1 & 0 & 0 \\ 0 & \ddots & 0 \\ & & \end{bmatrix} y_{ref} \tag{7}$$

$$\dot{y} = \begin{bmatrix} -p_1 & 0 & 0 \\ 0 & \ddots & 0 \\ 0 & 0 & -p_N \end{bmatrix} y + \begin{bmatrix} G_1 & 0 & 0 \\ 0 & \ddots & 0 \\ 0 & 0 & G_N \end{bmatrix} y_{ref} \tag{8}$$

$$\begin{bmatrix} \dot{y}_1 \\ \vdots \\ \dot{y}_N \end{bmatrix} = \begin{bmatrix} -p_1 & 0 & 0 \\ 0 & \ddots & 0 \\ 0 & 0 & -p_N \end{bmatrix} \begin{bmatrix} y_1 \\ \vdots \\ y_N \end{bmatrix} + \begin{bmatrix} G_1 & 0 & 0 \\ 0 & \ddots & 0 \\ 0 & 0 & G_N \end{bmatrix} \begin{bmatrix} y1_{ref} \\ \vdots \\ yN_{ref} \end{bmatrix} \tag{9}$$

En passant dans le domaine de Laplace, cela revient à avoir :

$$\begin{bmatrix} y_1 \\ \vdots \\ y_N \end{bmatrix} = \begin{bmatrix} \dfrac{G_1}{s + p_1} & 0 & 0 \\ 0 & \ddots & 0 \\ 0 & 0 & \dfrac{G_N}{s + p_N} \end{bmatrix} \begin{bmatrix} y1_{ref} \\ \vdots \\ yN_{ref} \end{bmatrix} \tag{10}$$

Ainsi, les réponses du système sont découplées et correspondent à des fonctions de transfert du premier ordre avec les pôles $p_i$ et les gains $G_i$.

Les valeurs des gains $G_i$ et des pôles $p_i$ sont déterminés en approchant les termes diagonaux du procédé par les premiers ordres de l'équation (10). Différentes techniques de réduction permettent de parvenir au choix des gains $G_i$ et des pôles $p_i$ à partir des transferts diagonaux du système.

On utilise par exemple à cet effet les techniques de réduction de modèle, comme par exemple la technique de troncature et en comparant les réponses fréquentielles des transferts originaux et celles des transferts réduits, en insistant sur la conservation du gain statique et de la fréquence de coupure.

Notamment, les gains $G_i$ et les pôles $p_i$ peuvent être choisis de manière à ce que les gains statiques et fréquences de coupure soient similaires.

On notera qu'avec la commande proposée, le découplage réalisé est total, le réglage de l'asservissement étant réalisé non pas au niveau de la boucle de retour d'état 103, mais au niveau des correcteurs/compensateurs de la boucle 101.

Ainsi, contrairement à la méthode dite de Falb-Wolovich [Commande et estimation multivariables, Ostertag, 2006], le but du système à retour d'état n'est pas d'asservir le procédé mais de le découpler.

Cela permet aux gains des correcteurs (voir ci-dessous) de conserver au mieux les dynamiques de transfert.

*Correcteurs monovariables*

Les correcteurs de la commande décentralisée 102 sont choisis afin d'ajuster l'asservissement désiré à partir du système découplé.

En particulier lorsque ces correcteurs sont des correcteurs PI, leur structure relativement simple facilite considérablement les réglages. En effet, la forme des correcteurs PI permet de conserver un certain sens physique, ce qui rend les réglages plus intuitifs. Ils peuvent alors être ajustés indépendamment du découplage, au cours d'essais sur bancs de tests.

Lorsqu'une autre méthode de découplage est utilisée et que le découplage n'est pas total, il est nécessaire d'utiliser des méthodes de synthèse dites multiboucles (méthodes de « detuning », méthodes séquentielles...). Ces dernières permettent de tenir compte des interactions entre les boucles SHP et XNP lors de la synthèse des correcteurs mais sont plus complexes que les méthodes de réglage classiques.

Le découplage par retour d'état étant total, des méthodes de réglage classiques peuvent être utilisées pour le réglage des correcteurs. Ces méthodes sont simples à mettre en oeuvre car les réglages peuvent être réalisés indépendamment pour asservir les sorties du système.

La méthode PID-IMC (Internal Model Control) peut notamment être utilisée pour effectuer ces réglages, à partir des fonctions de transfert du procédé découplé et des spécifications traduites sous forme de fonctions de transfert du premier ordre. Les réglages des régulateurs PI sont relativement simples et peuvent être effectués automatiquement à partir de cette méthode, des fonctions de transfert du procédé découplé et des spécifications.

D'autres correcteurs monovariables et d'autres méthodes de réglages peuvent néanmoins être utilisés à la place de la méthode PID-IMC.

*Paramétrage*

Le système de commande est ainsi paramétré selon un procédé de paramétrage comportant des étapes consistant à :

- E1 définir un modèle du système mécanique moteur considéré ;
- E2 définir un correcteur de retour d'état 105 et un compensateur statique 104 de manière à découpler les paramètres de sorties commandés, tout en conservant les dynamiques principales du système ;
- E3 définir les correcteurs de la commande décentralisée 102 (par exemple, des correcteurs PI monovariables) de manière à asservir les paramètres de sortie selon la loi souhaitée.

Optionnellement, le procédé peut comporter une étape E4 d'interpolation des correcteurs de la commande décentralisée 102, du correcteur de retour d'état 105 et du compensateur statique 104.

*Application au turbopropulseur*

La figure 7 illustre une application à la commande d'un turbopropulseur T.

Le système de commande illustré sur cette figure reçoit en entrée des consignes de puissance d'hélice SHPref et de vitesse de rotation d'hélice XNPref.

Ces consignes sont par exemple générées par une unité de gestion (non représentée) calculant lesdites consignes de puissance et de vitesse à partir d'une consigne de poussée elle-même fournie par un dispositif de commande 18, typiquement une manette.

Ledit système fournit en sortie la puissance d'hélice SHP et la vitesse de rotation d'hélice XNP du turbopropulseur, lesquelles sont mesurées par un capteur 106 de puissance d'hélice SHP et un capteur 107 de vitesse de rotation d'hélice XNP.

Le système comporte deux boucles de commande globale 101a et 101b, l'une (101a) qui asservit la puissance SHP sur la consigne de puissance SHPref, l'autre (101b) qui asservit la vitesse de rotation de l'hélice XNP sur la consigne de vitesse de rotation de l'hélice XNPref.

Un dérivateur 108a est placé en entrée de la boucle globale de puissance SHP 101a, et un dérivateur 108b est placé en entrée de la boucle globale de vitesse de rotation de l'hélice XNP 101b.

Egalement, des dérivateurs 109a et 109b reçoivent en entrée la puissance d'hélice SHP et la vitesse de rotation XHP et les renvoient sur les entrées de rétroaction des deux boucles 101a et 101b.

Chacune de ces deux boucles 101a, 101b comporte elle-même une commande décentralisée 110a, 110b et deux boucles de découplage 103a, 103b alimentées respectivement par les sorties des commandes décentralisées 110a, 110b.

Chaque commande décentralisée 110a, 110b reçoit en entrée le signal d'erreur de la boucle à laquelle il correspond.

La commande décentralisée 110a comporte un correcteur monovariable de puissance SHP configuré pour asservir la puissance SHP sur la consigne de SHPref, tandis que la commande décentralisée 110b comporte un correcteur monovariable de vitesse configuré pour asservir la vitesse XNP sur la consigne de XNPref.

Les boucles de découplage 103a, 103b intègrent un correcteur par retour d'état 105 configuré pour découpler la puissance d'hélice SHP et la vitesse de rotation d'hélice XNP du turbopropulseur 1 du point de vu des états du système.

Ledit correcteur 105 reçoit en entrée les sorties des dérivateurs 109a et 109b.

Les sorties du correcteur 105 forment les entrées de rétroaction desdites boucles 103a et 103b, lesquelles reçoivent sur leur autre entrée les sorties d'un compensateur statique 104.

Egalement, lesdites boucles 103a, 103b comportent respectivement un intégrateur 111a positionné avant l'entrée du contrôle de débit carburant WF du turbopropulseur T et un intégrateur 111b positionné avant l'entrée du contrôle de pas de l'hélice B du turbopropulseur T.

Ces deux intégrateurs 111a et 111b génèrent respectivement une commande de débit carburant WF et une commande de pas d'hélice B pour le turbopropulseur T.

Un certain nombre de points de fonctionnement caractéristiques sont définis. Ces points de fonctionnement caractéristiques sont caractérisés par des conditions de vol (Mach, altitude) et des états du turbopropulseur.

Des scénarii d'identification sont simulés lors de la phase de conception pour chacun de ces points de fonctionnement caractéristiques à partir d'un modèle thermodynamique non linéaire du moteur. La commande utilisée pour ces scénarios d'identification est typiquement un enchaînement d'échelons de commande désynchronisés avec du bruit blanc.

Les résultats de ces simulations sont ensuite utilisés pour caractériser le comportement du turbopropulseur et définir un modèle linéaire de turbopropulseur modélisant le fonctionnement du turbopropulseur et ayant comme entrées un débit carburant WF et un pas de l'hélice B et comme sorties une puissance de l'hélice SHP et une vitesse de rotation de l'hélice XNP.

Après analyse des résultats, on choisit un modèle de turbopropulseur d'ordre 2. Le modèle de turbopropulseur a donc deux variables d'état, l'ordre du système étant égal au nombre de variables d'état.

Le nombre de variables d'état étant égal à la fois au nombre d'entrées et au nombre de sorties du modèle du turbopropulseur, il est possible d'associer directement les variables d'état aux sorties du modèle du turbopropulseur. Les variables d'état du modèle du turbopropulseur sont donc la puissance de l'hélice SHP et la vitesse de rotation de l'hélice XNP.

Les étapes E2 et E3 utilisent une simulation numérique assistée par ordinateur du fonctionnement du turbopropulseur à l'aide du modèle de turbopropulseur défini à l'étape E1.

L'analyse de ces données a conduit à rechercher des modèles d'ordre 2 et sans action directe.

Les matrices de transfert des systèmes linéaires identifiés ont la forme (11) sous forme d'état et (12) sous forme de matrice de transfert. Après analyse des zéros et des matrices $B$ des systèmes linéaires sur l'ensemble des points de fonctionnement, il apparait que ces premiers sont bien stables et que les matrices $B$ sont inversibles.

La stratégie mixte de commande décentralisée est donc applicable.

$$\begin{bmatrix} \dot{SHP} \\ \dot{XNP} \end{bmatrix} = \begin{bmatrix} A_{11} & A_{12} \\ A_{21} & A_{22} \end{bmatrix} \begin{bmatrix} SHP \\ XNP \end{bmatrix} + \begin{bmatrix} B_{11} & B_{12} \\ B_{21} & B_{22} \end{bmatrix} \begin{bmatrix} WF \\ \beta \end{bmatrix} \tag{11}$$

$$\begin{bmatrix} SHP \\ XNP \end{bmatrix} = \begin{bmatrix} \dfrac{K_{11}(s+z_{11})}{(s+p_A)(s+p_B)} & \dfrac{K_{12}(s+z_{12})}{(s+p_A)(s+p_B)} \\ \dfrac{K_{21}(s+z_{21})}{(s+p_A)(s+p_B)} & \dfrac{K_{22}(s+z_{22})}{(s+p_A)(s+p_B)} \end{bmatrix} \begin{bmatrix} WF \\ \beta \end{bmatrix} \tag{12}$$

Partant de ce constat, on applique la démarche de détermination des paramètres présentée précédemment pour chacun des systèmes identifiés.

La première étape (E1) recherche automatiquement les dynamiques principales des transferts diagonaux du turbopropulseur sur chacun des modèles identifiés. Cela peut être fait automatiquement via certaines techniques de réduction de modèles, comme celle de troncature de la basé équilibrée. Il est ainsi possible de trouver des transferts du premier ordre qui approchent les transferts diagonaux composés de deux pôles et un zéro. On en déduit ainsi G1, G2, p1 et p2. Préférentiellement, les gains Gi et les pôles pi sont choisis de manière à ce que le gain statique des réponses fréquentielles des transferts réduits ne s'éloigne pas du gain statique des réponses fréquentielles des transferts originaux, et de manière à ce que la fréquence de coupure des réponses fréquentielles des transferts réduits ne s'éloigne pas de la fréquence de coupure des réponses fréquentielles des transferts originaux.

Dans la deuxième étape (E2), on détermine les matrices M et L analytiquement sur chaque point de fonctionnement en appliquant (10).

La troisième étape (E3) met en oeuvre une détermination des correcteurs PI pour les boucles de puissance SHP et de régime hélice XNP. Ceci est à nouveau réalisé analytiquement via la technique PID-IMC.

Les matrices $M$, $L$ et les correcteurs PI évoluent sur le domaine de vol pour compenser la variabilité du système. Afin de maximiser les performances de la régulation, les lois de commande sont interpolées en fonction des conditions de vol (Mach, altitude, état du turbopropulseur).

Les régulateurs PI sont donc interpolés afin d'accroître les performances du système (erreur statique, temps de réponse, dépassement) et les matrices M et L afin de conserver un découplage optimal.

L'interpolation des correcteurs permet d'accroître les performances du système de commande (et notamment en termes d'erreur statique, de temps de réponse, et de dépassement).

L'interpolation du correcteur de retour d'état 105 et du compensateur statique 104 permet de conserver un découplage optimal sur tout le domaine de vol.

En particulier, les paramètres des correcteurs monovariables peuvent être interpolés individuellement par séquencement de gains.

Le séquencement de gain consiste à déterminer une famille de systèmes linéaires, approchant le système non linéaire en un nombre de points de fonctionnement donnés, et à proposer des lois de commandes dans chacune des régions de l'espace d'état associées, pour réaliser finalement une loi de commande globale.

En particulier, lorsque les correcteurs monovariables sont des correcteurs PI, l'interpolation des gains est simple puisqu'il s'agit d'une somme de différentes actions pondérées par des gains. De même, le correcteur de retour d'état 105 et le compensateur statique 104 sont des matrices de gains (de taille $2 \times 2$) L et M, il est donc relativement simple d'interpoler les coefficients de ces matrices.

Un algorithme incrémental peut être utilisé afin de lisser les commandes lors de l'interpolation des lois de commande et de permettre des transitions plus douces lorsque plusieurs boucles de régulation sont mises en concurrence. Les consignes et les sorties sont ainsi dérivées (dérivateurs 108a, 108b et 109a, 109b) ce qui permet de travailler avec des incréments d'erreur, les incréments de commande étant par la suite intégrés.

Les lois de commande permettent d'atteindre des réponses optimales sur l'ensemble du domaine de vol, et ce, avec des lois de commande relativement simples et facilement ajustables.

*Application à d'autres systèmes*

Les étapes pour aboutir aux solutions dans le cas d'autres applications sont les mêmes que dans le cas du turbopropulseur.

Dans le cas d'un ensemble propulsif comprenant un doublet d'hélices contrarotatives non carénées « Open Rotor » ou carénées « Contrafan », les commandes comprennent le débit carburant WF et les pas des hélices $\beta_1$ et $\beta_2$. Les sorties comprennent quant à elles le régime du corps basse pression $N_{BP}$ et les régimes des deux hélices $N_1$ et $N_2$, comme présentés ci-dessous :

$$y = \begin{bmatrix} N_{BP} \\ N_1 \\ N_2 \end{bmatrix} ; x = \begin{bmatrix} WF \\ \beta_1 \\ \beta_2 \end{bmatrix} \qquad (13)$$

Le système linéarisé sur les différents points de fonctionnement est décrit par une matrice de transferts $3 \times 3$ pleine (tous les termes sont non nuls). Les différentes hypothèses sont bien respectées ce qui permet d'aboutir aux matrices L et M décrites dans (10).

Dans le cas de turboréacteurs à section de tuyères pilotées, les commandes comprennent le débit carburant WF et le courant de servovalve $i_{Tuy}$ alimentant le vérin permettant de jouer sur la section réglable de la tuyère. Les sorties comprennent quant à elles le régime du corps basse pression $N_{BP}$ et la position consolidée des vérins $x_{Tuy}$ :

$$y = \begin{bmatrix} N_{BP} \\ x_{Tuy} \end{bmatrix} ; x = \begin{bmatrix} WF \\ i_{Tuy} \end{bmatrix} \qquad (14)$$

Le système est linéarisé sur un nombre moins important de points de fonctionnement. Le système linéarisé correspond à une matrice $2 \times 2$, mais le transfert $WF \rightarrow x_{Tuy}$ est nul (la variation de débit carburant n'a pas d'impact direct sur la position de la tuyère). Il s'agit ainsi de minimiser l'autre terme de couplage à savoir $i_{Tuy} \rightarrow N_{BP}$. Cela ne change pas pour autant les hypothèses et la formule (10) peut être appliquée.

Dans le cas des turboréacteurs possédant des géométries variables, les commandes comprennent le débit carburant WF et les courants de commande des servovalves $i_{VSV}$ et $i_{VBV}$ permettant d'alimenter des vérins pour respectivement optimiser l'angle des stators (VSV pour *Variable Stator Vanes* selon la terminologie anglo-saxonne) du compresseur haute pression et moduler le biais d'ouverture des vannes de décharge (VBV pour *Variable Bleed Valves* selon la terminologie anglo-saxonne). Les sorties asservies comprennent le régime du corps basse pression $N_{BP}$ et les positions des vérins $x_{VSV}$ et $x_{VBV}$. Les consignes de ces actionneurs sont-elles mêmes parfaitement synchronisées.

$$y = \begin{bmatrix} N_{BP} \\ x_{VSV} \\ x_{VBV} \end{bmatrix} ; x = \begin{bmatrix} WF \\ i_{VSV} \\ i_{VBV} \end{bmatrix} \qquad (15)$$

Le système linéarisé sur les différents points de fonctionnement est décrit par une matrice de transferts 3×3. Les termes prépondérants sont les termes diagonaux et les transferts $WF \rightarrow x_{VSV}$ et $WF \rightarrow x_{VBV}$ sont nuls. Les autres termes de couplage sont en revanche non nuls (l'action des VBV impacte le régime basse pression directement, et l'action des VSV l'impacte également via le régime haute pression). La solution peut là encore s'appliquer.

**Revendications**

1. Système de commande (100) d'un moteur d'aéronef,
   **caractérisé en ce qu'**il comporte :

   - au moins une boucle d'asservissement (101) qui reçoit en entrée des consignes de paramètres sur des paramètres de fonctionnement du moteur et qui commande le système avec une boucle de rétroaction sur ces paramètres de fonctionnement, ladite boucle d'asservissement comportant une commande décentralisée (102) à régulateurs monovariables,
   - au moins une commande par retour d'état intégrée dans la boucle d'asservissement, ladite commande recevant en entrée les sorties de la commande décentralisée (102) à régulateurs monovariables et étant une boucle de rétroaction entre les paramètres de fonctionnement du moteur et les sorties de ladite commande décentralisée, ladite boucle de rétroaction fournissant les paramètres de commande du moteur,

   la commande par retour d'état étant configurée pour découpler les paramètres de fonctionnement, les régulateurs monovariables de la commande décentralisée étant configurés pour asservir les paramètres de fonctionnement sur les consignes de ces paramètres, la commande à retour comportant un compensateur statique (104) et une boucle à correcteur de retour d'état, ledit compensateur statique (104) et ladite boucle à correcteur de retour d'état (105) étant configurés pour découpler les paramètres de fonctionnement.

2. Système de commande d'un moteur selon la revendication 1, dans lequel les régulateurs monovariables de la commande décentralisée (102) sont des correcteurs proportionnels / intégrateurs.

3. Procédé de paramétrage d'un système de commande (100) d'un moteur d'aéronef, le système de commande comprenant au moins une boucle d'asservissement (101) qui reçoit en entrée des consignes de paramètres sur des paramètres de fonctionnement du moteur et qui commande le système avec une boucle de rétroaction sur ces paramètres de fonctionnement, ladite boucle d'asservissement comportant une commande décentralisée (102) à régulateurs monovariables,

   - au moins une commande par retour d'état intégrée dans la boucle d'asservissement, ladite commande recevant en entrée les sorties de la commande décentralisée (102) à régulateurs monovariables et étant une boucle de rétroaction entre les paramètres de fonctionnement du moteur et les sorties de ladite commande décentralisée, ladite boucle de rétroaction fournissant les paramètres de commande du moteur,

   la commande par retour d'état étant configurée pour découpler les paramètres de fonctionnement, les régulateurs monovariables de la commande décentralisée étant configurés pour asservir les paramètres de fonctionnement sur les consignes de ces paramètres, la commande à retour comportant un compensateur statique (104) et une boucle à correcteur de retour d'état, ledit compensateur statique (104) et ladite boucle à correcteur de retour d'état (105) étant configurés pour découpler les paramètres de fonctionnement selon l'une des revendications 1 à 2, comportant des étapes consistant à :

   - définir (E1) un modèle linéaire de moteur, le modèle possédant une fonction de transfert et une représentation d'état ;
   - définir (E2) un compensateur statique et un correcteur de retour d'état de manière à découpler les états constitués par les paramètres de fonctionnement du moteur à asservir ;
   - définir (E3) les régulateurs monovariables de manière à asservir lesdits paramètres de fonctionnement sur les consignes.

4. Procédé de paramétrage d'un système de commande (100) selon la revendication précédente, dans lequel le correcteur de retour d'état (105) et le compensateur statique (104) sont configurés pour que la fonction de transfert du système de commande (100) ait des gains et pôles correspondant à ceux de la fonction de transfert du modèle de moteur.

5. Procédé de paramétrage d'un système de commande selon l'une des revendications 3 ou 4, comportant en outre une étape d'interpolation (E4) des correcteurs monovariables en fonction de variables de conditions de vol.

6. Procédé de paramétrage d'un système de commande selon la revendication 5, dans lesquels les paramètres des correcteurs monovariables (22a, 22b) sont interpolés individuellement par séquencement de gains.

7. Procédé de paramétrage d'un système de commande selon l'une des revendications 3 à 6, comportant en outre une étape d'interpolation du correcteur de retour d'état et du compensateur statique en fonction de variables de conditions de vol (C1, C2, C3, ...).

8. Utilisation d'un système selon l'une des revendications 1 à 2 pour la commande d'un moteur possédant une hélice à pas variable, tel qu'un turbopropulseur, dans lequel les paramètres de fonctionnement asservis comprennent la puissance de l'hélice (SHP) et sa vitesse de rotation (XNP), les paramètres commandés comprenant le débit carburant et le pas de l'hélice.

9. Utilisation d'un système selon l'une des revendications 1 à 2 pour la commande d'un moteur possédant un doublet d'hélices contrarotatives à pas variables, dans lequel les paramètres de fonctionnement asservis comprennent le régime du corps basse pression (NBP) et les régimes des deux hélices (N1 et N2), les paramètres commandés comprenant le débit carburant (WF) et les pas des hélices ($\beta_1$ et $\beta_2$).

10. Utilisation d'un système selon l'une des revendications 1 à 2 pour la commande d'un turboréacteur à section de tuyère pilotée, dans lequel les paramètres de fonctionnement asservis comprennent le régime du corps basse pression (NBP) et la position du ou des vérins (xT) commandant la section réglable de la tuyère, les commandes comprenant le débit carburant (WF) et le courant de servovalve (iTuy) alimentant le ou les vérins.

11. Utilisation d'un système selon l'une des revendications 1 à 2 pour la commande d'un turboréacteur possédant des géométries variables, dans lequel les paramètres de fonctionnement asservis comprennent le régime du corps basse pression (NBP) et les positions des vérins (xVSV et xVBV), les commandes comprenant le débit carburant (WF) et les courants de commande des servovalves (iVSV et iVBV).


**Patentansprüche**

1. System zur Steuerung (100) eines Flugzeugmotors,
   **dadurch gekennzeichnet, dass** es aufweist:

   - mindestens eine Regelschleife (101), die am Eingang Parameter-Sollwerte über Betriebsparameter des Motors empfängt und die das System mit einer Rückkopplungsschleife über diese Betriebsparameter steuert, wobei die Regelschleife eine dezentrale Steuerung (102) mit monovariablen Reglern aufweist,
   - mindestens eine in die Regelschleife integrierte Steuerung durch Zustandsrückmeldung, wobei die Steuerung am Eingang die Ausgänge der dezentralen Steuerung (102) mit monovariablen Reglern empfängt und eine Rückkopplungsschleife zwischen den Betriebsparametern des Motors und den Ausgängen der dezentralen Steuerung ist, wobei die Rückkopplungsschleife die Steuerungsparameter des Motors bereitstellt,

   wobei die Steuerung durch Zustandsrückmeldung dazu ausgelegt ist, die Betriebsparameter zu entkoppeln, wobei die monovariablen Regler der dezentralen Steuerung dazu ausgelegt sind, die Betriebsparameter über die Sollwerte dieser Parameter zu regeln, wobei die Steuerung durch Rückmeldung einen statischen Kompensator (104) und eine Schleife mit Zustandsrückmeldungskorrektur aufweist, wobei der statische Kompensator (104) und die Zustandsrückmeldungskorrekturschleife (105) dazu ausgelegt sind, die Betriebsparameter zu entkoppeln.

2. System zur Steuerung eines Motors nach Anspruch 1, wobei die monovariablen Regler der dezentralen Steuerung (102) PI-Regler sind.

3. Verfahren zum Parametrieren eines Systems zur Steuerung (100) eines Flugzeugmotors, wobei das Steuerungssystem mindestens eine Regelschleife (101) umfasst, die am Eingang Parameter-Sollwerte über Betriebsparameter des Motors empfängt und die das System mit einer Rückkopplungsschleife über diese Betriebsparameter steuert, wobei die Regelschleife eine dezentrale Steuerung (102) mit monovariablen Reglern aufweist,

- mindestens eine in die Regelschleife integrierte Steuerung durch Zustandsrückmeldung, wobei die Steuerung am Eingang die Ausgänge der dezentralen Steuerung (102) mit monovariablen Reglern empfängt und eine Rückkopplungsschleife zwischen den Betriebsparametern des Motors und den Ausgängen der dezentralen Steuerung ist, wobei die Rückkopplungsschleife die Steuerungsparameter des Motors bereitstellt,

wobei die Steuerung durch Zustandsrückmeldung dazu ausgelegt ist, die Betriebsparameter zu entkoppeln, wobei die monovariablen Regler der dezentralen Steuerung dazu ausgelegt sind, die Betriebsparameter über die Sollwerte dieser Parameter zu regeln, wobei die Steuerung durch Rückmeldung einen statischen Kompensator (104) und eine Zustandsrückmeldungskorrekturschleife aufweist, wobei der statische Kompensator (104) und die Zustandsrückmeldungskorrekturschleife (105) dazu ausgelegt sind, die Betriebsparameter nach einem der Ansprüche 1 bis 2 zu entkoppeln, aufweisend folgende Schritte:

- Definieren (E1) eines linearen Motormodells, wobei das Modell eine Transferfunktion und eine Zustandsdarstellung besitzt;
- Definieren (E2) eines statischen Kompensators und einer Zustandsrückmeldungskorrektur, so dass die von den Betriebsparametern des zu regelnden Motors gebildeten Zustände entkoppelt werden;
- Definieren (E3) der monovariablen Regler, so dass die Betriebsparameter über die Sollwerte geregelt werden.

4. Verfahren zum Parametrieren eines Steuerungssystems (100) nach vorangehendem Anspruch, wobei die Zustandsrückmeldungskorrektur (105) und der statische Kompensator (104) dazu ausgelegt sind, damit die Transferfunktion des Steuerungssystems (100) Gains und Pole hat, die denen der Transferfunktion des Motormodells entsprechen.

5. Verfahren zum Parametrieren eines Steuerungssystems nach einem der Ansprüche 3 oder 4, aufweisend ferner einen Interpolationsschritt (E4) der monovariablen Korrektoren in Abhängigkeit von den Flugbedingungsvariablen.

6. Verfahren zum Parametrieren eines Steuerungssystems nach Anspruch 5, wobei die Parameter der monovariablen Korrektoren (22a, 22b) individuell durch Gainsequenzierung interpoliert werden.

7. Verfahren zum Parametrieren eines Steuerungssystems nach einem der Ansprüche 3 bis 6, aufweisend ferner einen Interpolationsschritt der Zustandsrückmeldungskorrektur und des statischen Kompensators in Abhängigkeit von Flugbedingungsvariablen (C1, C2, C3, ...).

8. Verwendung eines Systems nach einem der Ansprüche 1 bis 2 zur Steuerung eines Motors, der einen Verstellpropeller besitzt wie ein Turboprop-Triebwerk, wobei die geregelten Betriebsparameter die Leistung des Propellers (SHP) und seine Rotationsgeschwindigkeit (XNP) umfassen, wobei die gesteuerten Parameter den Kraftstoffdurchsatz und die Steigung des Propellers umfassen.

9. Verwendung eines Systems nach einem der Ansprüche 1 bis 2 zur Steuerung eines Motors, der ein Doublet gegenrotatorischer Verstellpropeller besitzt, wobei die geregelten Betriebsparameter die Drehzahl des Niederdruckkörpers (NBP) und die Drehzahlen der zwei Propeller (N1 und N2) umfassen, wobei die gesteuerten Parameter den Kraftstoffdurchsatz (WF) und die Steigungen der Propeller ($\beta_1$ und $\beta_2$) umfassen.

10. Verwendung eines Systems nach einem der Ansprüche 1 bis 2 zur Steuerung eines Turbotriebwerks mit gesteuertem Düsenquerschnitt, wobei die geregelten Betriebsparameter die Drehzahl des Niederdruckkörpers (NBP) und die Position des oder der Zylinder (xT) umfassen, die den regelbaren Querschnitt der Düse steuern, wobei die Steuerungen den Kraftstoffdurchsatz (WF) und den Servoventilstrom (iTuy) umfassen, der den oder die Zylinder versorgt.

11. Verwendung eines Systems nach einem der Ansprüche 1 bis 2 zur Steuerung eines Turbotriebwerks mit variablen Geometrien, wobei die geregelten Betriebsparameter die Drehzahl des Niederdruckkörpers (NBP) und die Positionen der Zylinder (xVSV und xVBV) umfassen, wobei die Steuerungen den Kraftstoffdurchsatz (WF) und die Steuerströme der Servoventile (iVSV und iVBV) umfassen.

**Claims**

1. Aircraft engine control system (100),
   **characterised in that** it comprises :

   - at least one control loop (101) which receives as input parameter setpoints on operating parameters of the engine and which controls the system with a feedback loop on these operating parameters, said control loop comprising a decentralised control (102) with monovariable regulators,
   - at least one state feedback control integrated in the control loop, said control receiving as input the outputs of the decentralised control (102) with monovariable regulators and being a feedback loop between the operating parameters of the motor and the outputs of said decentralised control, said feedback loop providing the motor control parameters,

   the feedback control being configured to decouple the operating parameters, the monovariable controllers of the decentralised control being configured to control the operating parameters to the setpoints of these parameters, the feedback control comprising a static compensator (104) and a feedback corrector loop, said static compensator (104) and said feedback corrector loop (105) being configured to decouple the operating parameters.

2. Motor control system according to claim 1, in which the monovariable regulators of the decentralised control (102) are proportional/integral correctors.

3. A method of setting the parameters of a control system (100) for an aircraft engine, the control system at least one control loop (101) which receives as input parameter setpoints on operating parameters of the engine and which controls the system with a feedback loop on these operating parameters, said control loop comprising a decentralised control (102) with monovariable regulators, at least one state feedback control integrated in the control loop, said control receiving as input the outputs of the decentralised control (102) with monovariable regulators and being a feedback loop between the operating parameters of the motor and the outputs of said decentralised control, said feedback loop providing the motor control parameters, the feedback control being configured to decouple the operating parameters, the monovariable controllers of the decentralised control being configured to control the operating parameters to the setpoints of these parameters, the feedback control comprising a static compensator (104) and a feedback corrector loop, said static compensator (104) and said feedback corrector loop (105) being configured to decouple the operating parameters according to one of claims 1 to 2, comprising steps consisting of :

   - defining (E1) a linear motor model, the model having a transfer function and a state representation;
   - defining (E2) a static compensator and a state feedback corrector so as to decouple the states constituted by the operating parameters of the motor to be controlled;
   - defining (E3) the monovariable controllers so as to control said operating parameters on the setpoints.

4. A method of setting parameters of a control system (100) according to the preceding claim, in which the state feedback corrector (105) and the static compensator (104) are configured so that the transfer function of the control system (100) has gains and poles corresponding to those of the transfer function of the motor model.

5. A method of setting parameters of a control system according to one of claims 3 or 4, further comprising a step of interpolating (E4) the monovariable correctors as a function of flight condition variables.

6. A method of setting parameters of a control system as claimed in claim 5, in which the parameters of the monovariable correctors (22a, 22b) are interpolated individually by gain sequencing.

7. A method of setting parameters of a control system according to one of claims 3 to 6, further comprising a step of interpolating the state feedback corrector and the static compensator as a function of flight condition variables (C1, C2, C3, ...).

8. Use of a system according to one of claims 1 to 2 for the control of an engine having a variable-pitch propeller, such as a turboprop, in which the controlled operating parameters comprise the power of the propeller (SHP) and the speed of rotation (XNP) thereof, the controlled parameters comprising the fuel flow and the pitch of the propeller.

9. Use of a system according to one of claims 1 to 2 for controlling an engine having a doublet of variable-pitch counter-rotating propellers, in which the controlled operating parameters comprise the speed of the low-pressure core (NBP) and the speeds of the two propellers (N1 and N2), the controlled parameters comprising the fuel flow (WF) and the pitches of the propellers ($\beta_1$ and $\beta_2$).

10. Use of a system according to one of claims 1 to 2 for controlling a turbojet engine with a piloted nozzle section, in which the controlled operating parameters comprise the speed of the low-pressure body (NBP) and the position of the actuator or actuators (xT) controlling the adjustable section of the nozzle, the controls comprising the fuel flow (WF) and the servo valve current (iTuy) power supplying the cylinder(s).

11. Use of a system according to one of claims 1 to 2 for controlling a turbojet engine having variable geometries, wherein the controlled operating parameters comprise the low-pressure core speed (NBP) and the actuator positions (xVSV and xVBV), the controls comprising the fuel flow (WF) and the servo valve control currents (iVSV and iVBV).

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5274558 A
- US 5001646 A
- US 5920478 A

**Littérature non-brevet citée dans la description**

- **G. ZAMES.** Feedback and Optimal Sensitivity Model Reference Transformations, Multiplicative Seminorms, and Approximations. *IEEE Transactions on Automatic Control,* 1981, vol. 26 (4
- **FALB-WOLOVICH.** *Commande et estimation multi-variables,* 2006